# EUROPEAN PATENT SPECIFICATION

(11) **EP 1 720 212 B1**
(45) Date of publication and mention of the grant of the patent: **13.10.2010**
(21) Application number: 06110200.0
(22) Date of filing: 21.02.2006
(51) Int. Cl.: H01R 13/646, H01R 13/66

(54) **In-line coaxial circuit assembly**
Koaxiale Verbindung mit einer integrierten Schaltungsanordnung
Connexion coaxiale comprenant un circuit intégré

(30) Priority: 04.05.2005 US 908253
(43) Date of publication of application: 08.11.2006
(73) Proprietor: Andrew Corporation, Orland Park Illinois 60462 (US)
(72) Inventor: Burke, Rodger, Naperville, IL 60540 (US); Van Swearingen, Kendrick, Woodridge, IL 60517 (US); Lee, Joon, Bolingbrook, IL 60490 (US); Davis, Howard, Clarendon Hills, IL 60514 (US)
(74) Representative: Lind, Urban Arvid Oskar

(56) References cited:
- WO-A-95/10116
- US-A- 576 782
- US-A- 3 518 583
- US-A1- 2004 169 986
- US-B1- 6 317 307
- US-B1- 6 688 916

## Description

### BACKGROUND

Electrical circuits such as filters, surge suppression, DC bias injection and or monitoring assemblies of various configurations have been adapted into modular assemblies for easy insertion in-line with coaxial transmission lines. Typically, a housing having a desired coaxial connector interface at either end is formed with a chamber adapted to receive a printed circuit board (PCB) with the required components and interconnecting circuitry. To minimize the opportunity for moisture infiltration, electrical interference and or vibration failure the PCB chamber is fully enclosed and environmentally sealed within the housing.

To minimize the degradation of signals in the transmission line from impedance discontinuities, the assembly typically has a pass through section along a longitudinal axis with center and outer conductor dimensions and spacing similar to those of the expected coaxial transmission line the housing is designed to be used with. Therefore, the PCB chamber has typically been formed as an off-axis extension of the housing in the form of a generally rectangular milled or cast cavity of the surrounding housing. Because the PCB chamber cavity(s) are off-axis, with respect to the pass through section, forming the prior housing requires separate axis specific housing re-mounting steps to complete milling operations during manufacture, significantly increasing the cost of the resulting assembly.

In-line coaxial assemblies with a cylindrical central cavity, formed coaxial with the pass through section have been used to enclose spiral inductorsurge suppressor elements that couple the inner conductor to the outer conductor, without a PCB. However, the central cylindrical inner cavity presents a significant impedance discontinuity with respect to the dimensions of the associated coaxial cable and the lack of a PCB prevents the use of more complex electrical circuits.

US Patent No. 6,317,307 discloses an in-line multi-element assembly having a PCB coupled in-line with the inner conductor in a first non-cylindrical cavity, and a second cavity through which the inner conductor passes which houses an excess voltage protector, such as a gas tube.

EP 0576782 discloses an in-line multi-element assembly having a PCB located in a cylindrical PCB chamber coaxial with and coupled to the inner conductor.

The increasing competition for in-line RF assemblies has focused attention on cost reductions resulting from increased materials, manufacturing and service efficiencies. Further, reductions in required assembly operations and the total number of discrete parts are desired.

Therefore, it is an object of the invention to provide an apparatus that overcomes deficiencies in the prior art.

BRIEF DESCRIPTION OF THE DRAWINGS

The accompanying drawings, which are incorporated in and constitute a part of this specification, illustrate embodiments of the invention and, together with the general and detailed descriptions of the invention appearing herein, serve to explain the principles of the invention.

Figure 1 is a schematic isometric external view of an exemplary embodiment of the invention, a coaxial ring circuit assembly in the form of an in-line DC Bias injector and surge suppressor.

Figure 2 is a schematic isometric exploded view of figure 1, the second portion shown in cross-section for clarity.

Figure 3 is a schematic side cross-section view of the assembly of figure 1.

Figure 4 is a schematic end view of the second portion of figure 1.

Figure 5 is a schematic isometric external view of an alternative embodiment of the invention.

Figure 6 is a schematic side cross-section view of the assembly of figure 5.

DETAILED DESCRIPTION

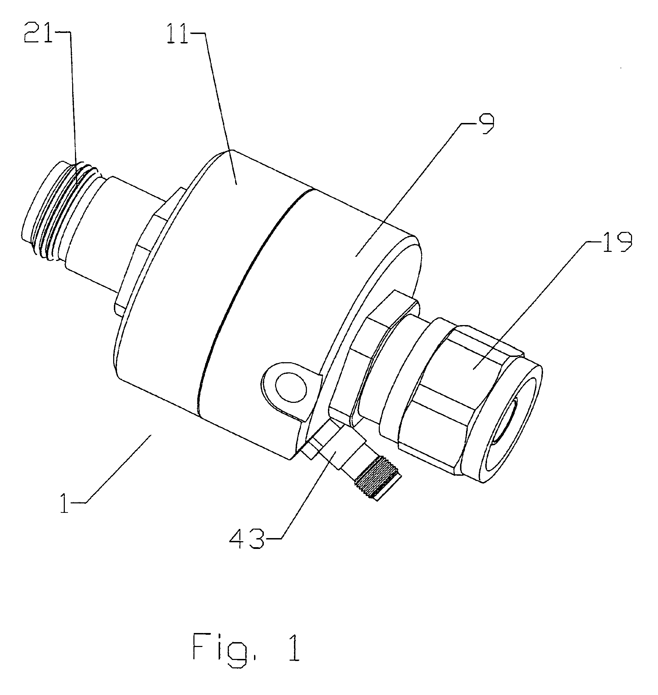

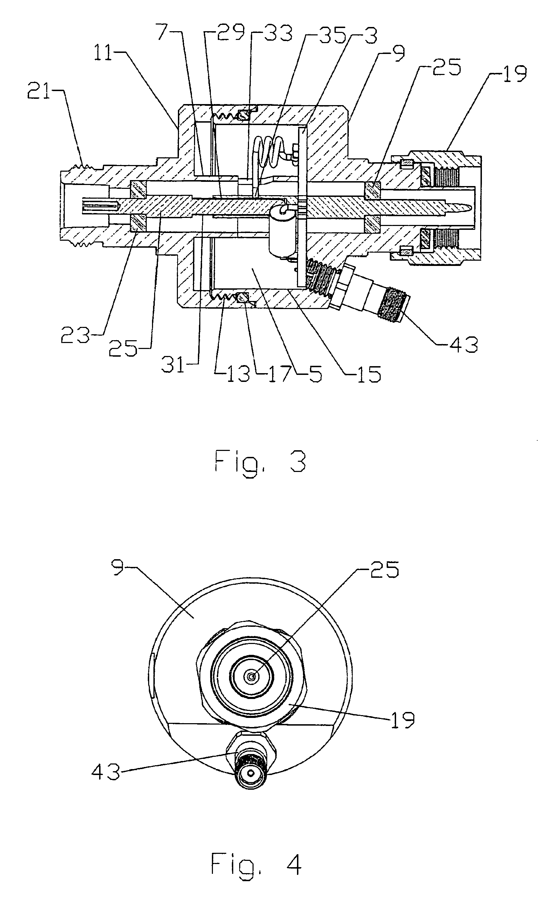

As shown in figures 1-4, a coaxial ring circuit assembly 1 according to an exemplary embodiment of the invention has a printed circuit board (PCB) 3 positioned in a perpendicular (normal) orientation with respect to a longitudinal axis of the assembly 1. The PCB 3 is seated within an enclosed cylindrical PCB chamber 5 surrounding an outer conductor sleeve 7 section.

The assembly 1 is composed of a first portion 9 and a second portion 11 adapted to couple together, for example via thread(s) 13 formed in corresponding overlapping sections of an outer wall 15 of each portion. A sealing gasket such as an o-ring 17 may be applied between the overlapping section(s) to environmentally seal the assembly 1. Alternatively, the first and second portion(s) 9,11 may be adapted for permanent interconnection via a friction fit between the overlapping sections of the outer wall 15.

The outer conductor sleeve 7 section(s) extend generally between a first connection interface 19 of the first portion 9 and a second connection interface 21 of the second portion 11. A diameter along the outer conductor sleeve 7 section(s) may be selected to seat insulator(s) 23 and or minimize an impedance discontinuity that may occur between the assembly 1 and upstream and or downstream coaxial cable that the assembly 1 will be coupled in-line with. The respective outer conductor sleeve 7 section(s) of the first and second portion(s) 9, 11 may be adapted to bottom against each other in secure electrical connection as the thread(s) 13 or other retaining arrangement formed along the outer wall(s) 15 are fully engaged.

The first portion 9 and second portion 11 also each support an inner conductor 25 positioned coaxially within the outer conductor sleeve 7 section by one or more insulator(s) 23. The inner conductor 25 of each portion is adapted to mate together as the first and second portion(s) 9, 11 are coupled, for example via a pin 27 into spring finger 29 configuration. Where direct current isolation is desired, such as DC bias injection for upstream circuits and or surge protection for downstream circuits, a dielectric spacer such as a dielectric sleeve 31 may be installed between the pin 27 and spring finger(s) 29 or other connection between the inner conductor 25 of each portion. The dielectric spacer may be alternatively formed as an air gap, dielectric coating or the like which provides a direct current break in the inner conductor 25 but capacitively couples higher frequencies via a capacitive coupling configurable via the thickness and or dielectric properties of the selected dielectric material. In alternative embodiments, the dielectric spacer or other form of DC break may be omitted and or permanently formed in the inner conductor so that a single inner conductor 25 element extends between the first connection interface 19 and the second connection interface 21.

Electrical connection between the PCB 3 and the inner conductor 25 is via at least one slot 33 formed in the outer conductor sleeve 7 section of the first and or second portion 9, 11. A coupling conductor 35, for example one leg of an inductor, passes from the PCB 3, through the slot 33 and is coupled to the inner conductor 25 for example via a butt solder joint and or insertion into a corresponding hole 35 formed in the inner conductor 25. The PCB 3 may be formed with contact surface(s) 37, for example about connection hole(s) 39, for coupling with the outer conductor and or a grounding connection about the bottom of the PCB chamber 5. To secure the PCB 3 within the PCB 3 chamber, connector(s) such as screw(s) 41 may applied through the connection hole(s) 39. Alternatively and or additionally, the PCB 3 may be coupled with one or more inputs and or output port(s) 43 formed in the first and or second portion(s) 9, 11. The port(s) 43 may be used, for example, to supply a DC bias current to the PCB 3 or as a signal tap output. To avoid interfering with the associated connection interface, the port(s) 43 may be arranged at an angle with respect to the longitudinal axis of the assembly 1.

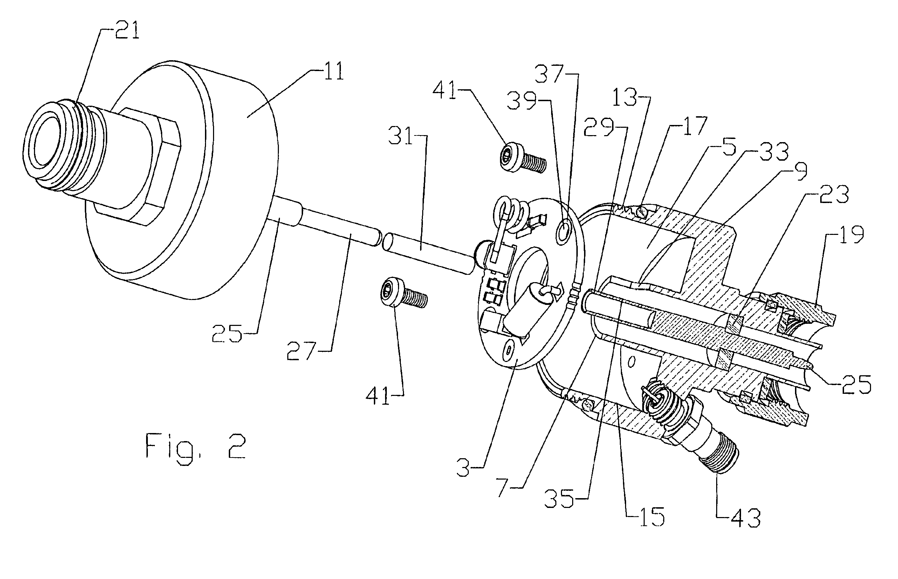

As shown in figure 2, the PCB 3 may be formed in a ring configuration. Alternatively, a portion of a ring such as a U shaped portion may be applied. The maximum dimensions of the PCB 3 are determined by the differential between the selected diameters of the outer conductor sleeve 7 section(s) and the outer wall 15. The PCB chamber 5 is also dimensioned longitudinally to accommodate the expected height of any PCB 3 mounted electrical components such as inductors, capacitors and or metal oxide varistors. In alternative embodiments, a PCB 3 may be applied at both ends of the PCB chamber 5 and or the desired electrical components may be mounted to both sides of a PCB 3.

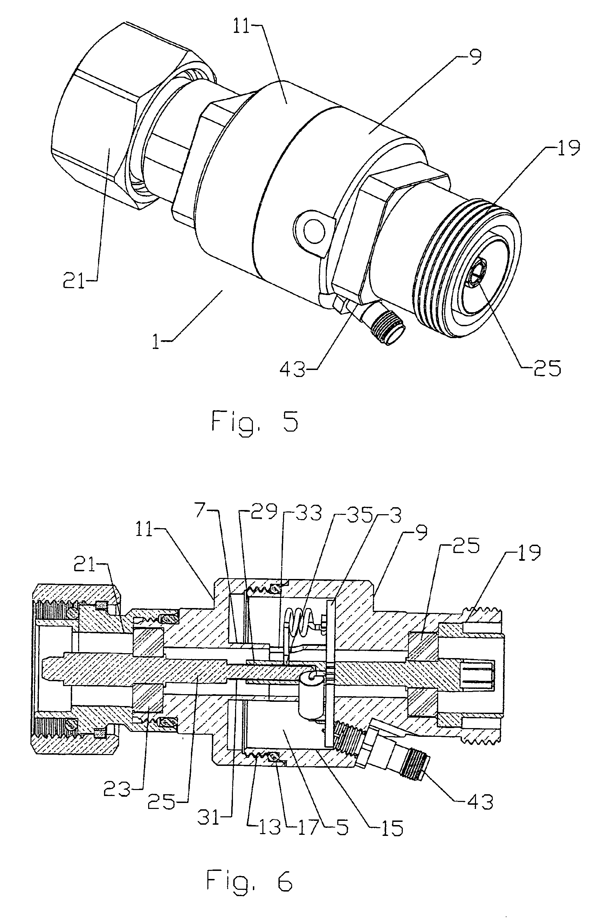

First and second electrical connection interface (s) 19, 21 at corresponding ends of the first and second portion(s) 9, 11 may be selected from standardized and or proprietary configurations according to the expected interface requirements of the assembly 1. For example, figures 1-4 demonstrate first and second connection interface(s) formed as male and female Type N connectors while figures 5 and 6 show a 7/16 DIN connector interface. Alternatively, any desired connector interface with selected male and or female configuration may be applied, including first and second connection interface(s) 19, 21 adapted to accept raw cable ends.

One skilled in the art will appreciate that the ring shaped PCB chamber 5 and perpendicular (normal) orientation of the PCB 3 therein allows a majority of the first and second portion 9, 11 features to be cast and or machined along a single central turning axis, greatly simplifying the machine tool equipment requirements and number of tool station mounting operations that are required during manufacture. Further, the separate cover, environmental seal and cover retaining hardware found in prior off-axis rectangular PCB chamber configurations has been eliminated.

**Table of Parts**

| | |
|---|---|
| 1 | assembly |
| 3 | printed circuit board |
| 5 | PCB chamber |
| 7 | outer conductor sleeve |
| 9 | first portion |
| 11 | second portion |
| 13 | thread |
| 15 | outer wall |
| 17 | o-ring |
| 19 | first connection interface |
| 21 | second connection interface |
| 23 | insulator |
| 25 | inner conductor |
| 27 | pin |
| 29 | spring finger |
| 31 | dielectric sleeve |
| 33 | slot |
| 35 | hole |
| 37 | contact surface |
| 39 | connection hole |
| 41 | screw |
| 43 | port |

Where in the foregoing description reference has been made to ratios, integers, components or modules having known equivalents then such equivalents are herein incorporated as if individually set forth.

## Claims

1. An in-line coaxial circuit assembly, comprising:
a first portion (9) which couples to a second portion (11);
the first portion (9) and the second portion (11) enclosing a cylindrical chamber (5), for a printed circuit board, PCB, the PCB chamber (5) coaxial with a longitudinal axis of the assembly (1);
an inner conductor (25) positioned along the longitudinal axis, isolated from the first portion (9) and the second portion (11); and
a PCB (3) in the PCB chamber (5);
**characterised by**
a cylindrical outer conductor sleeve (7) formed in at least one of the first portion (9) and the second portion (11); the outer conductor sleeve (7) coaxial with the inner conductor (25), isolating the PCB chamber (5) from the inner conductor (25).

2. The assembly of claim 1, further including
the first portion (9) having a first electrical connector interface (19) on a first end; the second portion (11) having a second electrical connector interface (21) on a second end;
the first portion (9) and the second portion (11) adapted to couple together along an outer wall (15) of at least one of the first portion (9) and the second portion (11);
a cylindrical outer conductor sleeve (7) coaxial with the outer wall (15) formed in at least one of the first portion (9) and the second portion (11); the enclosed cylindrical PCB chamber (5) located between the outer conductor sleeve (7) and the outer wall (15).

3. The assembly of claim 1, wherein the PCB (3) is oriented perpendicular to the longitudinal axis of the assembly (1).

4. The assembly of claim 2, wherein the inner conductor (25) is positioned coaxial within the outer conductor sleeve (7) extending between the first electrical connector interface (19) and the second electrical connector interface (21).

5. The assembly of claim 4, wherein the inner conductor (25) has an in-line dielectric spacer (31).

6. The assembly of claim 5, wherein the dielectric spacer (31) is a dielectric sleeve (31) positioned between a pin (27) of the inner conductor (25) and one or more spring finger(s) (29) of the inner conductor (25).

7. The assembly of claim 2, wherein the PCB (3) is coupled to the inner conductor (25) through a slot (33) in the outer conductor sleeve (7).

8. The assembly of claim 1, further including a dielectric spacer (31) between a first end and a second end of the inner conductor (25).

9. The assembly of claim 1, further including at least one port (43) in one of the first portion (9) and the second portion (11).

10. The assembly of claim 1, wherein the PCB (3) is ring shaped.

11. The assembly of claim 1, wherein the PCB (3) has a DC bias and surge suppression circuit.

12. The assembly of claim 1, wherein the PCB is coupled to the inner conductor (25) via an inductor.

13. The assembly of claim 12, wherein one end of the inductor is coupled to the inner conductor (25) by a butt solder joint.

14. The assembly of claim 1, wherein the first portion (9) and the second portion (11) coupling is via overlapping portions of the outer wall (15) formed in the first portion (9) and the second portion (11).

15. The assembly of claim 14, further including threads (13) formed in the overlapping portions of the outer wall (15).

16. A method for manufacturing an in-line coaxial circuit assembly, comprising the steps of:
forming a first portion (9) having a first electrical connector interface (19) on a first end;
forming a second portion (11) having a second electrical connector interface (21) on a second end;
at least one of the first portion (9) and the second portion (11) having a cylindrical outer conductor sleeve (7) coaxial with an outer wall (15) of at least one of the first portion (9) and the second portion (11);
positioning an inner conductor (25) coaxial within the outer conductor sleeve (7),
the inner conductor (25) extending between the first electrical connector interface (19) and the second electrical connector interface (21);
inserting printed circuit board, a PCB (3) into a PCB chamber (5) between the outer wall (15) and the outer conductor sleeve (7),
coupling the PCB (3) to the inner conductor (25) through a slot (33) in the outer conductor sleeve (7); and
coupling the first portion (9) and the second portion (11) together along the outer wall (15);
the coupling of the first portion (9) and the second portion (11) enclosing the cylindrical PCB chamber (5) between the outer conductor sleeve (7) and the outer wall (15).

17. The method of claim 16, wherein the inner conductor (25) is formed in two portions separated by a dielectric spacer (31).

18. The method of claim 16, further including the step of adding at least one output to one of the first portion (9) and the second portion (11), the output coupled to the PCB (3).

## Patentansprüche

1. Koaxiale Verbindung mit einer integrierten Schaltungsanordnung, die Folgendes umfasst:
einen ersten Abschnitt (9), der an einen zweiten Abschnitt (11) gekoppelt ist;
wobei der erste Abschnitt (9) und der zweite Abschnitt (11) eine zylindrische Kammer (5) für eine gedruckte Leiterplatte, PCB, umschließen, wobei die PCB-Kammer (5) koaxial zu einer Längsachse der Anordnung (1) verläuft;
einen inneren Leiter (25), der entlang der Längsachse angeordnet ist und von dem ersten Abschnitt (9) und dem zweiten Abschnitt (11) isoliert ist; und
eine PCB (3) in der PCB-Kammer (5),
**gekennzeichnet durch**
eine zylindrische äußere Leiterhülse (7), die in dem ersten Abschnitt (9) und/oder dem zweiten Abschnitt (11) ausgebildet ist, wobei die äußere Leiterhülse (7) koaxial zu dem inneren Leiter (25) verläuft und die PCB-Kammer (5) von dem inneren Leiter (25) isoliert.

2. Anordnung nach Anspruch 1, wobei:
der erste Abschnitt (9) eine erste elektrische Verbindergrenzfläche (19) an einem ersten Ende aufweist;
der zweite Abschnitt (11) eine zweite elektrische Verbindergrenzfläche (21) an einem zweiten Ende aufweist;
der erste Abschnitt (9) und der zweite Abschnitt (11) dafür geeignet sind,
entlang einer äußeren Wand (15) des ersten Abschnitts (9) und/oder des zweiten Abschnitt (11) miteinander gekoppelt zu werden;
die zylindrische äußere Leiterhülse (7) koaxial zu der äußeren Wand (15), die in dem ersten Abschnitt (9) und/oder dem zweiten Abschnitt (11) ausgebildet ist, verläuft, wobei die umschlossene zylindrische PCB-Kammer (5) zwischen der äußeren Leiterhülse (7) und der äußeren Wand (15) angeordnet ist.

3. Anordnung nach Anspruch 1, wobei die PCB (3) senkrecht zur Längsachse der Anordnung (1) ausgerichtet ist.

4. Anordnung nach Anspruch 2, wobei der innere Leiter (25) koaxial in der äußeren Leiterhülse (7) angeordnet ist und sich zwischen der ersten elektrischen Verbindergrenzfläche (19) und der zweiten elektrischen Verbindergrenzfläche (21) erstreckt.

5. Anordnung nach Anspruch 4, wobei der innere Leiter (25) einen integrierten dielektrischen Abstandshalter (31) aufweist.

6. Anordnung nach Anspruch 5, wobei der dielektrische Abstandshalter (31) eine dielektrische Hülse (31) ist, die zwischen einem Stift (27) des inneren Leiters (25) und einem oder mehreren Federfingern (29) des inneren Leiters (25) angeordnet ist.

7. Anordnung nach Anspruch 2, wobei die PCB (3) durch einen Schlitz (33) in der äußeren Leiterhülse (7) mit dem inneren Leiter (25) gekoppelt ist.

8. Anordnung nach Anspruch 1, die des Weiteren einen dielektrischen Abstandshalter (31) zwischen einem ersten Ende und einem zweiten Ende des inneren Leiters (25) enthält.

9. Anordnung nach Anspruch 1, die des Weiteren mindestens eine Öffnung (43) in dem ersten Abschnitt (9) oder dem zweiten Abschnitt (11) aufweist.

10. Anordnung nach Anspruch 1, wobei die PCB (3) ringförmig ist.

11. Anordnung nach Anspruch 1, wobei die PCB (3) einen Gleichspannungsvorspann- und Überspannungsbegrenzungsschaltkreis aufweist.

12. Anordnung nach Anspruch 1, wobei die PCB über eine Induktionsspule mit dem inneren Leiter (25) gekoppelt ist.

13. Anordnung nach Anspruch 12, wobei ein Ende der Induktionsspule durch eine Stoßstellenlötverbindung mit dem inneren Leiter (25) gekoppelt ist.

14. Anordnung nach Anspruch 1, wobei die Kopplung des ersten Abschnitts (9) und des zweiten Abschnitt (11) mittels Überlappungsabschnitten der äußeren Wand (15), die in dem ersten Abschnitt (9) und dem zweiten Abschnitt (11) ausgebildet ist, bewerkstelligt wird.

15. Anordnung nach Anspruch 14, die des Weiteren Gewindegänge (13) aufweist, die in den Überlappungsabschnitten der äußeren Wand (15) ausgebildet sind.

16. Verfahren zum Herstellen einer koaxialen Verbindung mit einer integrierten Schaltungsanordnung, das folgende Schritte umfasst:
Ausbilden eines ersten Abschnitts (9), der eine erste elektrische Verbindergrenzfläche (19) an einem ersten Ende aufweist;
Ausbilden eines zweiten Abschnitts (11), der eine zweite elektrische Verbindergrenzfläche (21) an einem zweiten Ende aufweist;
wobei der erste Abschnitt (9) und/oder der zweite Abschnitt (11) eine zylindrische äußere Leiterhülse (7) aufweisen, die koaxial mit einer äußeren Wand (15) des ersten Abschnitts (9) und/oder des zweiten Abschnitts (11) verläuft;
Anordnen eines inneren Leiters (25) koaxial in der äußeren Leiterhülse (7),
wobei sich der innere Leiter (25) zwischen der ersten elektrischen Verbindergrenzfläche (19) und der zweiten elektrischen Verbindergrenzfläche (21) erstreckt;
Einsetzen einer gedruckten Leiterplatte, PCB, (3) in eine PCB-Kammer (5) zwischen der äußeren Wand (15) und der äußeren Leiterhülse (7);
Koppeln der PCB (3) mit dem inneren Leiter (25) durch einen Schlitz (33) in der äußeren Leiterhülse (7), und
Aneinanderkoppeln des ersten Abschnitts (9) und des zweiten Abschnitts (11) entlang der äußeren Wand (15);
wobei durch das Koppeln des ersten Abschnitts (9) und des zweiten Abschnitts (11) die zylindrische PCB-Kammer (5) zwischen der äußeren Leiterhülse (7) und der äußeren Wand (15) umschlossen wird.

17. Verfahren nach Anspruch 16, wobei der innere Leiter (25) in zwei Abschnitten ausgebildet ist, die durch einen dielektrischen Abstandshalter (31) getrennt sind.

18. Verfahren nach Anspruch 16, das des Weiteren den Schritt des Hinzufügens mindestens eines Ausgangs zu dem ersten Abschnitt (9) und/oder dem zweiten Abschnitt (11) enthält, wobei der Ausgang mit der PCB (3) gekoppelt wird.

## Revendications

1. Ensemble de circuit coaxial en ligne, comprenant :
une première portion (9) qui se couple à une seconde portion (11) ;
la première portion (9) et la seconde portion (11) renfermant une chambre cylindrique (5) pour une carte de circuit imprimé, PCB, la chambre de PCB (5) étant coaxiale à un axe longitudinal de l'ensemble (1) ;
un conducteur interne (25) positionné le long de l'axe longitudinal, isolé de la première portion (9) et de la seconde portion (11) ; et
une carte de circuit imprimé (3) dans la chambre de PCB (5),
**caractérisé par**
un manchon conducteur extérieur cylindrique (7) formé dans au moins une de la première portion (9) et la seconde portion (11) ; le manchon conducteur extérieur (7) étant coaxial au conducteur intérieur (25), isolant la chambre de PCB (5) par rapport au conducteur intérieur (25).

2. Ensemble selon la revendication 1, incluant en outre :
la première portion (9) possédant une première interface de connecteur électrique (19) sur une première extrémité ;
la seconde portion (11) possédant une seconde interface de connecteur électrique (21) sur une seconde extrémité ;
la première portion (9) et la seconde portion (11) étant adaptées afin de se coupler l'une à l'autre le long d'une paroi extérieure (15) d'au moins une de la première portion (9) et la seconde portion (11) ;
un manchon conducteur extérieur cylindrique (7) coaxial à la paroi extérieure (15) formée dans au moins une de la première portion (9) et la seconde portion (11) ; la chambre de PCB cylindrique renfermée (5) étant située entre le manchon conducteur extérieur (7) et la paroi extérieure (15).

3. Ensemble selon la revendication 1, dans lequel la carte de circuit imprimé (3) est orientée perpendiculairement à l'axe longitudinal de l'ensemble (1).

4. Ensemble selon la revendication 2, dans lequel le conducteur intérieur (25) est positionné coaxialement à l'intérieur du manchon conducteur extérieur (7) s'étendant entre la première interface de connecteur électrique (19) et la seconde interface de connecteur électrique (21).

5. Ensemble selon la revendication 4, dans lequel le conducteur intérieur (25) possède une entretoise diélectrique en ligne (31).

6. Ensemble selon la revendication 5, dans lequel l'entretoise diélectrique (31) est un manchon diélectrique (31) positionné entre une broche (27) du conducteur intérieur (25) et un ou plusieurs doigt(s) à ressort (29) du conducteur intérieur (25).

7. Ensemble selon la revendication 2, dans lequel la carte de circuit imprimé (3) est couplée au conducteur intérieur (25) à travers une fente (33) dans le manchon conducteur extérieur (7).

8. Ensemble selon la revendication 1, incluant en outre une entretoise diélectrique (31) entre une première extrémité et une seconde extrémité du conducteur intérieur (25).

9. Ensemble selon la revendication 1, incluant en outre au moins un port (43) dans une de la première portion (9) et la seconde portion (11).

10. Ensemble selon la revendication 1, dans lequel la carte de circuit imprimé (3) est en forme d'anneau.

11. Ensemble selon la revendication 1, dans lequel la carte de circuit imprimé (3) possède un circuit de suppression de surtension et de polarisation CC.

12. Ensemble selon la revendication 1, dans lequel le carte de circuit imprimé est couplée au conducteur intérieur (25) via un inducteur.

13. Ensemble selon la revendication 12, dans lequel une extrémité de l'inducteur est couplée au conducteur intérieur (25) par un joint de soudure bout à bout.

14. Ensemble selon la revendication 1, dans lequel le couplage de la première portion (9) et la seconde portion (11) se fait via des portions se superposant de la paroi extérieure (15) formées dans la première portion (9) et la seconde portion (11).

15. Ensemble selon la revendication 14, incluant en outre des filetages (13) formés dans les portions se superposant de la paroi extérieure (15).

16. Procédé de fabrication d'un ensemble de circuit coaxial en ligne, comprenant les étapes consistant à :
former une première portion (9) possédant un première interface de connecteur électrique (19) sur une première extrémité ;
former une seconde portion (11) possédant une seconde interface de connecteur électrique (21) sur une seconde extrémité ;
au moins une de la première portion (9) et la seconde portion (11) possédant un manchon conducteur extérieur cylindrique (7) coaxial à une paroi extérieure (15) d'au moins une de la première portion (9) et la seconde portion (11) ;
positionner un conducteur intérieur (25) coaxialement à l'intérieur du manchon conducteur extérieur (7), le conducteur intérieur (25) s'étendant entre la première interface de connecteur électrique (19) et la seconde interface de connecteur électrique (21) ;
insérer une carte de circuit imprimé, PCB, (3) dans une chambre de PCB (5) entre la paroi extérieure (15) et le manchon conducteur extérieur (7) ;
coupler la carte de circuit imprimé (3) au conducteur intérieur (25) à travers une fente (33) dans le manchon conducteur extérieur (7) ; et
coupler la première portion (9) et la seconde potion (11) l'une à l'autre le long de la paroi extérieure (15) ;
le couplage de la première portion (9) et la seconde portion (11) renfermant la chambre de carte de circuit imprimé cylindrique (5) entre le manchon conducteur extérieur (7) et la paroi extérieure (15).

17. Procédé selon la revendication 16, dans lequel le conducteur intérieur (25) est formé en deux portions séparées par une entretoise diélectrique (31).

18. Procédé selon la revendication 16, incluant en outre l'étape d'ajout d'au moins une sortie à une de la première portion (9) et la seconde portion (11), la sortie étant couplée à la carte de circuit imprimé (3).
